# EUROPEAN PATENT APPLICATION

(11) **EP 4 790 949 A1**
(43) Date of publication of application: **12.08.2026**
(21) Application number: 25156458.9
(22) Date of filing: 07.02.2025
(51) Int. Cl.: H04L 9/32, H04L 9/00

(54) **METHOD AND SYSTEM FOR GENERATING A DIGITAL SIGNATURE**

(71) Applicant: NXP B.V., 5656 AG Eindhoven (NL)
(72) Inventor: Verbakel, Denise Elisabeth Petronella, 5656AG Eindhoven (NL); van Vredendaal, Christine, 5656AG Eindhoven (NL)
(74) Representative: Colaiuda, Antonella

(57) **Abstract**

The present disclosure relates to system and method for generating a digital signature. comprising computing via a hash function a public key; computing a signature comprising an authentication path traversing the node of at least one binary subtree belonging to a hypertree comprising d layers of binary subtrees each comprising a root node and leaf-nodes; storing the leaf-nodes at the top layer *d-1*, and those of at least one of the binary subtrees at an intermediate layer *d-x,* where *2≤x<d;* extracting a binary subtree index *idxₜᵣₑₑ* and inferring if the extracted binary subtree index *idxₜᵣₑₑ* is associated with at least one binary subtree linked to the stored leaf-nodes at the intermediate layers; choosing an operation mode; generating the digital signature based on the chosen operation mode and on the association of the extracted binary subtree index *idxₜᵣₑₑ* with a binary subtree linked to the stored leaf-nodes at the intermediate layers.

## Description

### TECHNICAL FIELD

The present disclosure relates to a method for generating a digital signature (DSA) of a message. Without being limited thereto, it is of particular significance for stateless hash-based signatures (SLH-DSA). The disclosure further relates to a device for performing such a method.

### BACKGROUND

A digital signature is a mathematical algorithm which provides a way for each user to sign messages or documents so that the signatures can later be verified from a third party. Digital signatures are based on the concept of private and public key: a user may sign a message with a private key and then transmits the signed message with a public key. The public key is used to verify the authenticity of the private key.

With the introduction of quantum computers hash-based signature schemes have been introduced: those signatures rely on the security of hash functions and one-time signatures schemes.

### SUMMARY

Aspects of the disclosure are defined in the accompanying claims.

In a first aspect of the present disclosure, a computer implemented method for generating a digital signature is disclosed. The method comprises the steps of: computing via a hash-function a public key, and computing a signature, such signature comprising an authentication path, wherein the authentication path is a path traversing at least one node of at least one binary subtree belonging to an hypertree having d layers of binary subtrees. The hypertree comprises a ground layer, a top layer and at least one intermediate layer between the top layer and the ground layer. Each binary subtree comprises a root node and multiple leaf-nodes. The method further comprises the steps of storing the leaf-nodes of the binary subtree at the top layer *d* - 1 and storing the leaf-nodes of at least one of the binary subtrees at one of the intermediate layers *d - x,* where 2 ≤ *d* < *x*. The method further comprises the step of extracting a binary subtree index *idxₜᵣₑₑ* and inferring if the extracted binary subtree index *idxₜᵣₑₑ* is associated with at least one binary subtree linked to one of the stored leaf-nodes at the intermediate layers. The method further comprises the step of selecting an operation mode between a first operation mode and a second operation mode and generating the digital signature based on the selected operation mode and on the association of the extracted binary subtree index *idxₜᵣₑₑ* with at least one binary subtree linked to one of the stored leaf-nodes at one of the intermediate layers.

In one or more embodiments of the first aspect of the present disclosure, the method may comprise the steps of: detecting that the first operation mode is chosen and that the extracted binary subtree index *idxₜᵣₑₑ* is associated with one of the binary subtree linked to one of the stored leaf-nodes at one of the intermediate layers, and generating in response the digital signature by using the stored leaf-nodes at the top layer and the stored leaf-nodes at one of the intermediate layers.

In one or more embodiments of the first aspect of the present disclosure, the method may comprise the steps of detecting that the second operation mode is chosen and that the extracted binary subtree index *idxₜᵣₑₑ* is not associated with one of the binary subtree linked to one of the stored leaf-nodes at one of the intermediate layers, and in response to such detection performing the steps of: generating the digital signature by using the stored leaf-nodes at the top layer and updating the stored leaf-nodes of at least one of the binary subtrees at one of the intermediate layers with the leaf-nodes of a binary tree at one of the intermediate layers associated with the current authentication path.

In one or more embodiments of the first aspect of the present disclosure, the hash function of the present method may be function of at least one randomizer. In one or more embodiments, the randomizer is calculated as pseudorandom function having as input at least: a message to be signed, a secret key and n bytes of randomness.

In one or more embodiments of the first aspect of the present disclosure, the method may comprise the steps of detecting that the first operation mode is chosen and the extracted binary subtree index *idxₜᵣₑₑ* is not associated with the binary subtree of one of the leaf-nodes stored on the intermediate layers or detecting that the second operation mode is chosen and the extracted binary subtree index *idxₜᵣₑₑ* is associated with the binary subtree of one of the leaf-nodes stored on the intermediate layers; and in response to such detection performing the steps of: re-computing the randomizer and re-computing the hash function.

In one or more embodiments of the first aspect of the present disclosure, the binary subtrees are eXtended Merkle Signature Scheme trees.

In one or more embodiments of the first aspect of the present disclosure, the leaf-nodes of the binary subtrees correspond to one-time signatures.

In one or more embodiments of the first aspect of the present disclosure, the at least one of the binary subtrees at one of the intermediate layers, for which the leaf-node are stored, is chosen randomly.

In one or more embodiments of the first aspect of the present disclosure, the digital signature is a stateless hash-based digital signature.

In a second aspect of the present disclosure, there is provided a system configured to implement the method according to the first aspect of the present disclosure. The system comprises at least one processor, a storage comprising memory instructions, a user interface and at least one communication bus. The at least one processor is configured to compute via a hash function a public key and to compute a signature, such signature comprising an authentication path, wherein the authentication path is a path traversing at least one node of at least one binary subtree belonging to a hypertree having d layers of binary subtrees, wherein the hypertree comprises a top layer, a ground layer and at least one intermediate layer between the ground layer and the top layer and wherein each binary subtree of the hypertree comprises at least a root node and multiple leaf-nodes. The storage is configured to store the leaf-nodes of the binary subtree at the top layer of the hypertree and configured to store the leaf-nodes of at least one of the binary subtrees at one of the intermediate layers of the hypertree. The storage further comprises memory instructions for extracting a binary subtree index and for inferring if the binary subtree index is associated with at least one binary subtree linked to one of the stored leaf-nodes at one of the intermediate layers The user interface is configured to select an operation mode between a first operation mode and a second operation mode. The at least one communication bus is configured to connect the storage, the user interface and the at least one processor; wherein the at least one processor is further configured to generate the digital signature based on the selected operation mode and on the association of the binary subtree index with at least one binary subtree linked to one of the stored leaf-nodes at one of the intermediate layers.

In one embodiment of the second aspect, a selection between a first and a second operation mode is performed through the user interface.

In a third aspect of the present disclosure, there is provided a non-transitory computer-readable storage medium containing program instructions for computing a digital signature, wherein execution of the program instructions by one or more processors of a computer causes the one or more processors to perform steps according to the methods of the first aspect of the present disclosure.

### DESCRIPTION OF DRAWINGS

Embodiments of the present disclosure will be described in more detail with reference to the appended drawings, in which:
Figure 1 shows a digital signature scheme according to a first embodiment of the present disclosure.
Figure 2 shows a simplified depiction of an hypertree according to an embodiment of the first aspect of the present disclosure.
Figure 2a shows a simplified depiction of an authentication path according to an embodiment of the first aspect of the present disclosure.
Figure 3 shows a simplified flow chart according to an embodiment of the first aspect of the present disclosure.
Figure 4 shows a simplified system according to a third aspect of the present disclosure.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar features in modified and different embodiments.

### DESCRIPTION OF EMBODIMENTS

A digital signature generation is the process of using digital signature scheme and a private key to generate a digital signature on data. A private key is a cryptographic key which is uniquely associated with the owner, and it is private, i.e. it is not made public. The private key is used with an asymmetric cryptographic algorithm, also known as public key algorithm. The private key is used to generate a digital signature, which may be verified using the corresponding public key.

A public key is a cryptographic key which is associated with a private key. The public key may be made accessible, i.e. public. The public key is used to verify a digital signature that was generated using the corresponding private key. A private key and the corresponding public key are usually referred to as a key pair.

A stateless hash-based digital signature scheme (SLH-DSA) is type of digital signature having as components a few-time signature scheme and a multi-trees signature scheme. Stateless hash-based signatures rely on hash functions and do not maintain any internal state information between signature generation processes. The few-time signature scheme may be a forest random subset (FORS), while the multi-trees signature scheme may be an eXtended Merkle Signature Scheme (XMSS). In particular, a SLH-DSA signature may include a FORS signature along with a sequence of d XMSS signatures, which authenticate the FORS public keys. The sequence of d XMSS signatures needed to authenticate a FORS public key when starting with the public key of the XMSS key at layer d - 1 is called hypertree signature. The XMSS signatures may be constructed using the hash-based one-time signature scheme Wintemitz One-Time Signature Plus (WOTS+).

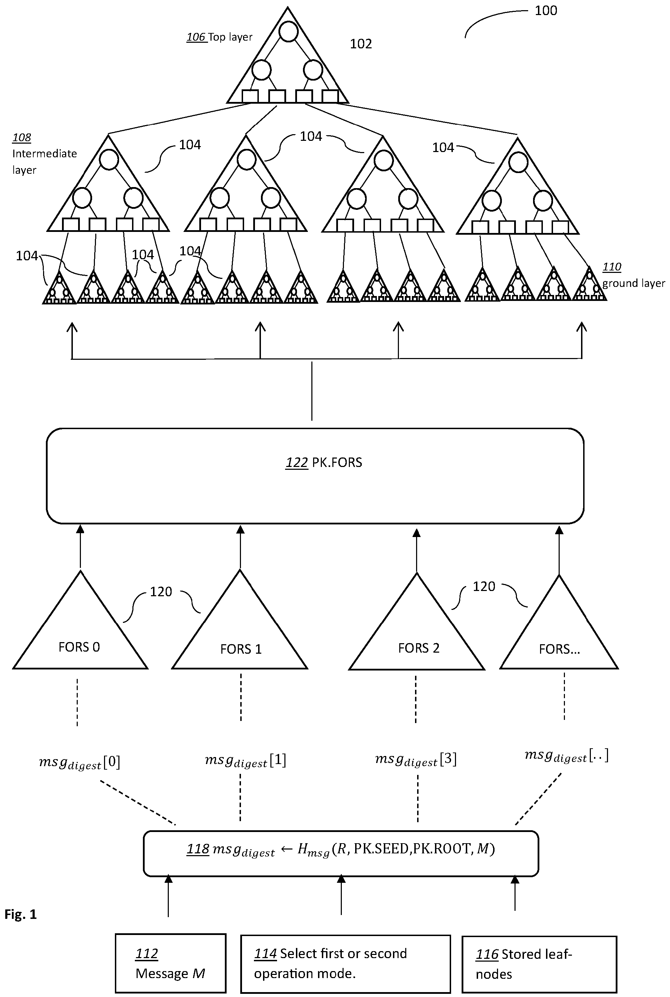

Fig. 1 shows a digital signature scheme (100) according to a first aspect of the present disclosure. The digital signature scheme may be a SLH-DSA scheme. The SLH-DSA scheme may include a set of binary trees schematically represented by the triangles 120. The set of binary trees may use a FORS scheme signature. The SLH-DSA scheme further includes a hypertree, such hypertree having d layer of binary subtrees, represented by the triangles 102, 104. The binary subtrees of the hypertree may be XMSS binary trees. Each single binary subtree 102, 104 has a height h'. The top layer of the hypertree (106) is defined as d - 1 and includes a single binary subtree 102. The ground layer of the hypertree (110) is the lowest layer of the hypertree and is defined as layer zero and includes *2*^{(*d*-1)*h*'}*binary* subtrees 104. The intermediate layers of the hypertrees (108) are located between the ground layer and the top layer and are defined as *d* - *x,* (where 2 ≤ *x* < *d*). Each intermediate layer includes 2^{*h*'} binary subtrees 104.

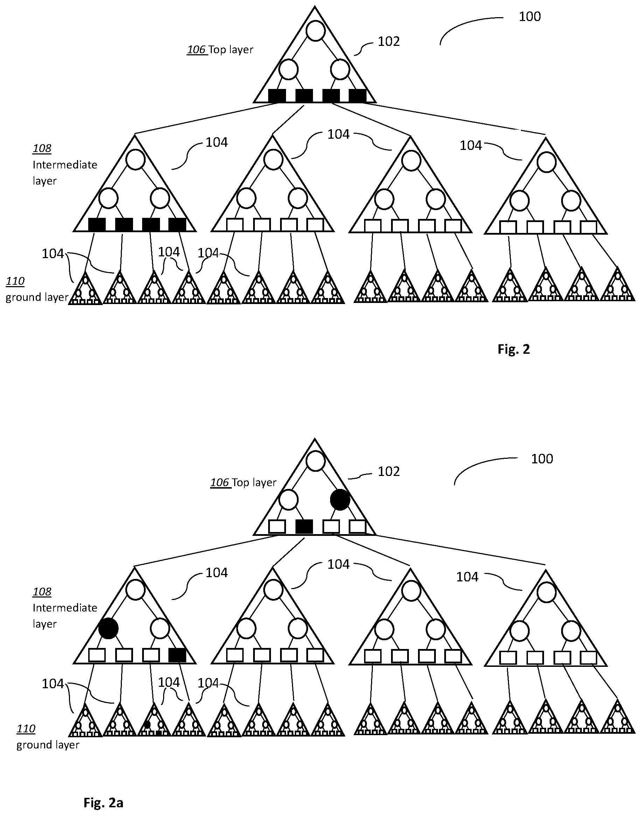

The ground layer of each binary subtree includes the leaf-nodes of the binary subtree. Because each single binary subtree (102, 104) has a height *h*', there are 2^{*h*'} leaf-nodes in a binary subtree. The leaf-nodes of each binary subtree (102,104) are public keys and are represented by squares in Fig. 1. The public keys may be WOTS⁺ public keys. The circles in each binary subtree (102,104) represent interior nodes of the binary subtrees. The top-layer node of each binary subtree is identified as root node. Accordingly, each binary subtree may then be represented as a binary hash tree with WOTS+ schemes at the leaves: the value of each node of each binary subtree is the output of hashing its child nodes. A signature then includes a WOTS+ signature and an authentication path from the leaf-nodes to the root node. The authentication path will be discussed in more detail in Fig. 2 and Fig. 2a.

The method for generating a digital signature of the present disclosure includes the step of receiving a message *M* 112 to be signed. The message *M* includes all the data to be signed by the digital signature.

According to an embodiment of the present disclosure the method further includes the steps 116 of: i) store 2^{*h*'} leaf-nodes of the binary subtree at layer *d* - 1, i.e. at the top layer and ii) store 2^{*h*'} leaf-nodes of a randomly chosen binary subtree at layer *d* - *x*, i.e. at one or multiple intermediate layers. Both previous steps may further include the action of storing the index tree of the binary subtree, which includes the stored leaf-nodes.

The method of the present disclosure further includes the step of computing a randomizer *R* (not shown). For the computation of the randomizer a pseudorandom function *PRF_{msg}* is chosen. In addition, a randomized or a deterministic mode may be chosen. The randomized mode samples *n* bytes of randomness ( $addrnd {←}^{$} {B}^{n}$) in the signature generation to generate randomizer *R* (the first n bytes of the digital signature) as follows: $R ← {PRF}_{msg} \left(SK.PRF,addrnd,M\right)$
wherein SK.PRF is a component of the private key of the digital signature. In another embodiment the mode of SLH-DSA may be set as deterministic. If the mode is set to deterministic, then PK. SEED (the n-byte public key seed) is used for generating the randomizer R according to the following equation: $R ← {PRF}_{msg} \left(SK.PRF,PK.SEED,M\right)$

A possibility to use the deterministic variant within the method of the present disclosure would be to add a counter to the message *M*.

A hash function *H_{msg}* 118 is then applied to the message. The result obtained by applying the hash function to the message M is also known as "message digest" or "hash value". Several instantiations of hash functions may be applied, depending on the used SLH-DSA parameter set. Examples of hash functions may be SHA2 (secure hash algorithm 2) or SHAKE (secure hash algorithm and Keccak). The message digest of a message M may be computed as following: ${msg}_{digest} ← {H}_{msg} \left(R,PK.SEED,PK.ROOT,M\right)$
wherein PK.ROOT is the public key root of the binary subtree at the top layer, i.e. at layer *d - 1*. The computed message digest is then used to select a FORS key. This may be done by splitting the message digest component *msg_{digest}* into *k*-bit chunks and by using each of these chunks to select a leaf-node in one of the *k* binary trees (120) that build the FORS authentication scheme. The authentication paths from the leaf-nodes to the respective root together with the pseudorandomly generated FORS secret key form the FORS signature, SIG_{FORS}. The authentication path starts from the sibling node of the selected leaf-node, and it reaches the root node of the binary subtree. The authentication path may traverse several nodes of the binary subtree, if the binary subtree has more layers than just the top layer and the layer zero. The root node of the binary subtree may be seen as arriving target of the authentication path but it is not part of the authentication path itself as it may be inferred from its child-nodes. A FORS public key, at 122, is generated by hashing the k concatenated root nodes of the FORS binary trees.

The public key PK.FORS is calculated as ${PK}_{FORS} ← {T}_{k} \left(PK.SEED,ADRS,root\right)$ wherein *root* contains the *k*-root nodes of the FORS binary trees.

After selecting the FORS keypair as explained before, part of the message is signed with the FORS key pair.

The so calculated FORS public key is then authenticated by the hypertree comprising d layers of binary subtrees 102,104.

The binary subtree index needed for authenticating the FORS public key may be calculated as:
${idx}_{tree}^{′} ← {msg}_{digest} \left[\left⌈\frac{k * a}{8}\right⌉:\left⌈\frac{k ∗ a}{8}\right⌉+\left⌈\frac{h - h ′}{8}\right⌉\right]$ and this value is then converted to an integer according to: ${idx}_{tree} ← toInt \left({idx}_{tree}^{′}, \left⌈\frac{h - h ′}{8}\right⌉\right) mod {2}^{h - h ′}$

The calculated binary subtree is associated with one specific binary subtree at the ground level. In other words, the binary subtree index identifies one specific binary subtree at the ground level. The binary subtree index of equation 6 allows to calculate the authentication paths from the leaf-nodes to the root PK.ROOT. During the verification process, the signature is valid if hashing the authentication paths provides the same root PK.ROOT. Usually SLH-DSA signature generation needs to perform the following computations in the XMSS multi-tree part: *d* * 2^{*h*'} leaf-node computations, which requires *d* * 2^{*h*'} * (*len* * *w +* 1) hashes, wherein: $w = {2}^{lg} , {len}_{1} = \frac{8 n}{lg} , {len}_{2} = \frac{\left(log\left({len}_{1}∗\left(w-1\right)\right)\right.}{lgw} ; len = {len}_{1} + {len}_{2} .$
Typical values for *lg, w* and *len* are: *lg =* 4; *w =* 16 ; *len* = *2n* + 3.
In the method of the present disclosure there is a memory-performance trade-off given by storing the 2^{*h*'} leaf-nodes of the binary subtree at the top layer and at the intermediate layers. This has the effect of reducing the computational costs to
(*d* - *x*) * 2^{*h*'} leaf-node computations, which costs (*d* - *x*) * 2^{*h*'} * (*len* * *w +* 1) hashes.

In addition, storing 2 * 2^{*h*'} leaf-nodes costs 2 * 2^{*h*'} * *n* bytes. Each signature saves 2 * 2^{*h*'} * (*len* + *len* * (*w -* 1) + 1) = 2^{*h*'+1} * (*len* * *w +* 1) hash operations.

According to an embodiment of the present disclosure, the method further includes the step 114 of choosing between a first and a second operation mode. The first operation mode may be identified as a fast operation mode. The second operation mode may be identified as a refresh mode. The fast operation mode may be used when a signer wants to immediately make use of the leaf-nodes stored in memory. The refresh operation mode may be used when a signer has enough time for updating some stored nodes and perform a SLH-DSA signature generation operation with 2^{*h*'} leaf-nodes stored instead of 2 * 2^{*h*'} leaf-nodes. In a further embodiment the refresh operation mode and the fast operation mode may be interleaved, such that, for example, the refresh mode is automatically selected after a predetermined number of signature generations using the fast mode. For example, after the generation of several signatures via the fast operation mode, a refresh operation mode may be selected, and the leaf-nodes may be then updated.

According to an embodiment of the present disclosure, if a first operation mode (fast operation mode) is selected and the computed *idxₜᵣₑₑ* is associated with a binary subtree linked to one of the leaf-nodes stored at layer *d* - *x*, the method continues to perform the SLH-DSA signature generation by using the stored leaf-nodes on layer *d -* 1 (top layer) and *d* - *x* (intermediate layer). Because the leaf-nodes of the binary subtrees have been previously stored for the top layer as well as the intermediate layer, no re-computation of the leaf-nodes is needed. This has the effect of reducing the computational costs of generating the SLH-DSA signature.

In another embodiment, if the second operation mode (refresh operation mode) is selected and the computed binary subtree index *idxₜᵣₑₑ* is an index that is not associated with a binary subtree linked to one of the leaf-nodes stored on layer *d* - *x* (intermediate layer), the method continues to perform the SLH-DSA signature generation by using the stored leaf-nodes on layer *d* - 1 (top layer) but not the ones stored on layer *d* - *x* (intermediate layers). Instead, an update of the stored leaf-nodes at layers *d* - *x* is performed: the previously stored leaf-nodes of layer *d* - *x* are replaced with the leaf-nodes of the binary subtree at layer *d* - *x,* which is associated with the current authentication path.

In another embodiment when during signing the second operation mode (refresh operation mode) is used and the computed binary subtree *idxₜᵣₑₑ* index is associated with a binary subtree linked to one of the leaf-nodes stored on layer *d* - *x*; or when the first operation mode (fast operation mode) is used and the computed binary subtree *idxₜᵣₑₑ* is not associated with a binary subtree linked to one of the leaf-nodes stored on layer *d* - *x*, a re-hashing of the message is needed to eventually obtain the SLH-DSA signature. For computing the re-hashing the randomizer *R* as well as the message digest *msg_{digest}* should be re-computed. Every time a re-hash is needed because *idxₜᵣₑₑ* does not end up in the desired binary subtree, it costs 2 hashes: one to re-compute the randomizer *R* and one to re-compute the message digest *Msg_{digest}.*

Fig. 2 shows an example according to a first embodiment of the present disclosure.

In the example of Fig. 2 the hypertree has *d* = 3 layers. The top layer is then located at *d* - 1. In this example there is one intermediate layer located at *d* - 2. Each binary subtree of the present example as a height h' = 2 and as consequence 2^{*h*'} = 4 leaf-nodes. The step of storing the leaf-nodes will then include: i) store the 2^{*h*'} = 4 leaf-nodes of the binary subtree at layer *d* - 1, i.e. at the top layer and ii) store 2^{*h*'} = 4 leaf-nodes of at least one of the binary subtrees at layer *d* - 2, i.e. at the intermediate layer. The binary subtree at layer *d* - 2, for which 2^{*h*'} = 4 leaf-nodes are stored, may be chosen randomly. The stored leaf-nodes are represented by black rectangles in Fig. 2. In the present example, the stored leaf-nodes belong to the first binary subtree (starting from the left side) of the intermediate layer. Storing the leaf-nodes may include the step of storing with which binary subtree the leaf-nodes are associated. This may be achieved by storing the index tree *idxₜᵣₑₑ* of the respective binary subtree.

Then a first operation mode or a second operation mode should be selected. In the present example a first operation mode (a fast mode) is selected. The method proceeds according to the steps explained above for Fig. 1 until the step where the binary subtree index *idxₜᵣₑₑ* for the authentication paths is computed according to equation 6. An example of an authentication path is shown in Fig. 2a. In this example the black rectangles represent the traversed leaf-nodes, and the black circles represent the traversed nodes. The authentication path is a concatenation of nodes needed to traverse the binary subtree starting from a leaf-node at layer 0 until reaching the root node of the top layer *d* - 1, where PK.ROOT is located. Each node and each rectangle belongs to a binary subtree. Each leaf-node of each binary subtree at the intermediate layers is linked to the root of one specific binary subtree at the inferior, that is to say, lower, level. For *d=3* there is just one intermediate layer at *d* - 2: each leaf-node of each binary subtree at layer *d-2* is linked by construction to one specific subtree at level zero. Each binary subtree at level zero has a specific index tree *idxₜᵣₑₑ* that may be computed according to equation 5 and equation 6 above. As an example, referring to Fig. 2 and Fig. 2a, a binary subtree index *idxₜᵣₑₑ* = 2 may be calculated through Eq. 5 and Eq. 6. This index represents the third binary subtree at level zero starting from the left side (as the numeration of *idxₜᵣₑₑ* starts from zero). It may then be inferred that such binary subtree is linked to the third leaf-node of the first binary subtree (starting from the left side) at the intermediate layer d - 2. This leaf-node is one of the leaf-nodes stored in the preparation steps at the intermediate layer (see Fig. 2). It may then be concluded that the extracted binary subtree index *idxₜᵣₑₑ* = 3 is associated with one binary subtree linked to the stored leaf-nodes at the intermediate layer. According to the steps explained above, the method then continues to perform the SLH-DSA signature generation by using the stored leaf-nodes on layer *d* - 1 (top layer) and *d* - 2 (intermediate layer). This has the effect to reduce the leaf-nodes computation from *d* * 2^{*h*'} = 12 to (*d* - 2) * 2^{*h*'} = 4.

As an alternative to the method explained in this disclosure one could save the full top-layer binary subtree (comprising the leaf-nodes and parent nodes). This costs roughly the same number of bytes as storing two layers of leaf-nodes, as explained in this disclosure. Storing two layers of leaf-nodes as explained in the present disclosure has the effect of saving more hashes relative to storing the full top-layer.

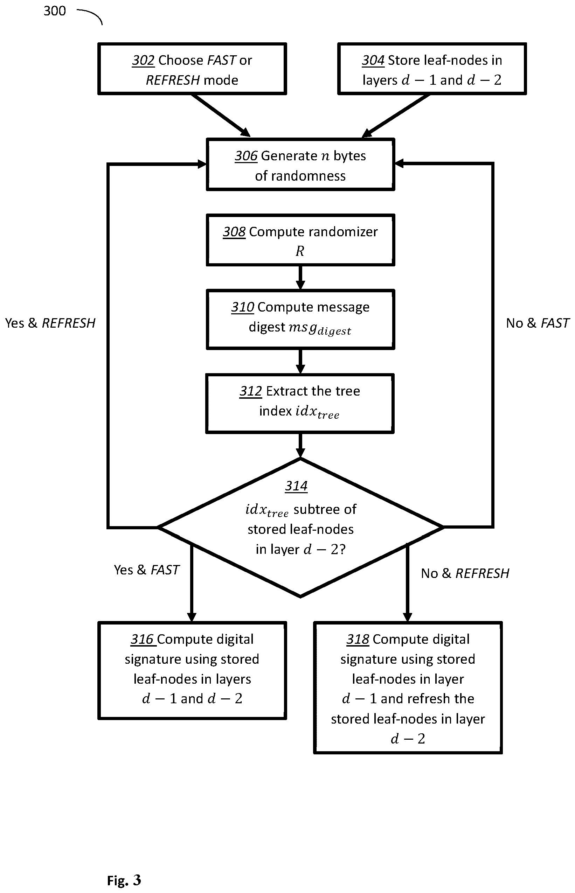

Fig. 3 shows a simplified flow chart 300 according to one embodiment of the present disclosure. In this example the value of *d* is set to 3. In the preparation steps (302, 304), an operation mode is selected between fast and refresh operation mode (step 302) and the leaf-nodes at layers *d* - 2 and *d* - 1 (step 304) are stored. In step 306 a randomized mode is selected and *n* bytes of randomness ( $addrnd {←}^{$} {B}^{n}$) are computed. Those bytes are used in step 308 for computing the randomizer R according to equation 1. In step 310 a message digest according to equation 3 is computed. In step 312 the binary subtree index is extracted according to equation 6. In step 314 it is inferred if the extracted binary subtree index is associated with a binary subtree linked to one of the stored leaf-nodes at layer *d* - 2. If the fast operation mode was chosen in step 302 and the extracted binary subtree index is associated with a binary subtree linked to one of the stored leaf-nodes at layer *d* - 2, then a digital signature is computed using stored leaf-nodes in layers *d* - 1 and *d* - 2 (316). If the refresh operation mode was chosen in step 302 and the extracted binary subtree index is not associated with a binary subtree linked to one of the stored leaf-nodes at layer *d* - 2 , then a digital signature is computed using the stored leaf-nodes at layer *d* - 1 while the stored leaf-nodes at layer *d* - 2 are updated with the value of the leaf-nodes of the current binary subtree (318), which is associated with the current authentication path. In all other cases a re-computing of the randomizer and of the hash function takes place and the method restarted at step 306.

By following the scheme shown in Fig. 3 it is possible to reduce the computational time and to optimize the efficiency of the digital signature generation algorithm. This has the effect of making digital signature accessible to devices with constrained memory or performance capabilities, such as microcontrollers or secure elements.

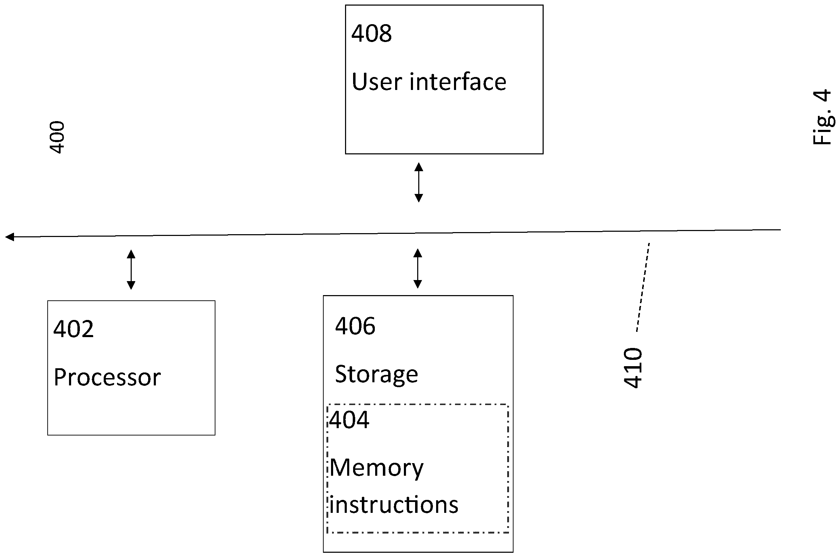

Fig. 4 shows a simplified view of a processing system according to a second aspect of the present disclosure. The processing system 400 may be a system-on-a-chip (SoC) implemented on a single integrated circuit, or it may be a combination of chips. The processing system 400 includes at least one processor 402 for executing the instructions stored in the memory instructions 404. Such instructions may include all or some of the instructions needed for generating a digital signature according to the method disclosed in the present application. The at least one processor 402 may include one or more of any type of processing element, a processor core, microprocessor, microcontroller, field-programmable gate arrays (FPGAs), application-specific integrated circuits (ASICs), digital signal processor, and the like. The processing system 400 may include one or more processors 402.

Storage 406 may include the memory instructions 404. The storage may be used for storing the leaf-nodes according to the method of the present disclosure. Storage 406 may be one or more of any type of volatile or non-volatile memory. Examples of memory types include non-volatile memories such as flash, one-time programmable (OTP), EEPROM (electrically erasable programmable read only memory), and the like. Volatile memory types include static random-access memory (SRAM) and dynamic random-access memory (DRAM). If the leaf-nodes are stored in the storage 406, then a non-volatile memory should be used.

User interface 408 allows a user to communicate with the processing system 400. The user interface may be connected to one or more devices for enabling communication with a user such as an administrator. For example, user interface 408 may be enabled for coupling to a display, a mouse, a keyboard, or other input/output device. User interface 408 may also include a network interface having one or more devices for enabling communication with other hardware devices external to the processing system 400. The user interface could be used by a user for entering the message to be digitally signed according to the present disclosure. The user interface may be further used by a user for selecting the refresh mode or the fast mode according to the method of the present disclosure.

The processing system 400 further includes at least one communication bus represented as arrow 410 in Fig. 4. Such communication bus(es) may be a conventional communication bus(es) having a plurality of conductors for communicating address, data, and control information.

The at least one processor 402, the memory instructions 404, the storage 406 and the user interface 408 may be bi-directionally connected to the communication bus 410. This allows for exchange of information among all the components of the processing system 400.

From reading the present disclosure, other variations and modifications will be apparent to the skilled person. Such variations and modifications may involve equivalent and other features which are already known in the art of semiconductor device processing, and which may be used instead of, or in addition to, features already described herein.

Although the appended claims are directed to particular combinations of features, it should be understood that the scope of the disclosure of the present specification also includes any novel feature or any novel combination of features disclosed herein either explicitly or implicitly or any generalization thereof, whether or not it relates to the same specification as presently claimed in any claim and whether or not it mitigates any or all of the same technical problems as does the present specification

The present disclosure refers to elements or features being "linked" or "coupled" together. As used herein, unless expressly stated otherwise, "linked" means that one element is directly joined to (or directly communicates with) another element, and not necessarily mechanically. Likewise, unless expressly stated otherwise, "coupled" means that one element is directly or indirectly joined to (or directly or indirectly communicates with, electrically or otherwise) another element, and not necessarily mechanically. Thus, although the schematic shown in the figures depict one exemplary arrangement of elements, additional intervening elements, devices, features, or components may be present in an embodiment of the depicted subject matter.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom.

For the sake of completeness, it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims. Furthermore, the word "may" is used in a permissive sense (i.e., meaning having the potential to), rather than the mandatory sense (i.e., meaning must). Similarly, the words "include," "including," and "includes" mean including, but not limited to. Unless stated otherwise, terms such as "first" and "second" are used to arbitrarily distinguish between the elements such terms describe. Thus, these terms are not necessarily intended to indicate temporal or other prioritization of such elements.

## Claims

1. A computer implemented method for generating a digital signature, the method comprising the steps of:
computing via a hash function a public key;
computing a signature, such signature comprising an authentication path, wherein the authentication path is a path traversing at least one node of at least one binary subtree belonging to a hypertree having d layers of binary subtrees, wherein the hypertree comprises a top layer, a ground layer and at least one intermediate layer between the ground layer and the top layer and wherein each binary subtree of the hypertree comprises at least a root node and multiple leaf-nodes;
storing the leaf-nodes of the binary subtree at the top layer of the hypertree;
storing the leaf-nodes of at least one of the binary subtrees at one of the intermediate layers of the hypertree;
extracting a binary subtree index *idxₜᵣₑₑ*;
inferring if the binary subtree index *idxₜᵣₑₑ* is associated with at least one binary subtree linked to one of the stored leaf-nodes at one of the intermediate layers;
selecting an operation mode between a first operation mode and a second operation mode; and
generating the digital signature based on the selected operation mode and on the association of the binary subtree index *idxₜᵣₑₑ* with at least one binary subtree linked to one of the stored leaf-nodes at one of the intermediate layers.

2. The computer implemented method according to claim 1 further comprising the steps of:
detecting that the first operation mode is chosen and that the binary subtree index *idxₜᵣₑₑ* is associated with at least one binary subtree linked to one of the leaf-nodes stored at one of the intermediate layers,
and in response to such detection performing the step of:
generating the digital signature by using the stored leaf-nodes at the top layer and the stored leaf-nodes at one of the intermediate layers.

3. The computer implemented method according to claim 1 further comprising the steps of:
detecting that the second operation mode is chosen and that the binary subtree index *idxₜᵣₑₑ* is not associated with at least one binary subtree linked to one of the leaf-nodes stored at one of the intermediate layers,
and in response to such detection performing the steps of:
generating the digital signature by using the stored leaf-nodes at the top layer and
updating the stored leaf-nodes at one of the intermediate layers with the leaf-nodes of a binary tree at one of the intermediate layers associated with the current authentication path.

4. The computer implemented method according to any of the preceding claims wherein the hash function is a function of at least one randomizer.

5. The computer implemented method according to claim 4, wherein the randomizer is computed as a pseudorandom function having as input at least: a message to be signed, a secret key and *n* bytes of randomness.

6. The computer implemented method according to claim 4 or claim 5 further comprising the step of: detecting that the first operation mode has been chosen and the binary subtree index *dxₜᵣₑₑ* is not associated with a binary subtree linked to one of the leaf-nodes stored at one of the intermediate layers and in response to such detection performing the steps of: re-computing the randomizer and re-computing the hash function.

7. The computer implemented method according to claim 4 or claim 5 further comprising the step of: detecting that the second operation mode has been chosen and the extracted binary subtree index *idxₜᵣₑₑ* is associated with a binary subtree linked to one of the leaf-nodes stored at one of the intermediate layers; and in response to such detection performing the steps of: re-computing the randomizer and re-computing the hash function.

8. The computer implemented method according to any of the preceding claim wherein the binary subtrees are eXtended Merkle Signature Scheme trees.

9. The computer implemented method according to any of the preceding claim wherein the leaf-nodes of the binary subtrees correspond to one-time signatures.

10. The computer implemented method according to any of the preceding claim wherein the at least one of binary subtrees at one of the intermediate layers for which the leaf-node are stored is chosen randomly.

11. The computer implemented method according to any of the preceding claim wherein the digital signature is a stateless hash-based digital signature.

12. A processing system comprising:
at least one processor configured to compute via a hash function a public key and configured to compute a signature, such signature comprising an authentication path, wherein the authentication path is a path traversing at least one node of at least one binary subtree belonging to a hypertree having d layers of binary subtrees, wherein
the hypertree comprises a top layer, a ground layer and at least one intermediate layer between the ground layer and the top layer and wherein each binary subtree of the hypertree comprises at least a root node and multiple leaf-nodes;
a storage configured to store the leaf-nodes of the binary subtree at the top layer of the hypertree and configured to store the leaf-nodes of at least one of the binary subtrees at one of the intermediate layers of the hypertree;
such storage comprising memory instructions for extracting a binary subtree index *idxₜᵣₑₑ* and for inferring if the binary subtree index *idxₜᵣₑₑ* is associated with at least one binary subtree linked to one of the stored leaf-nodes at one of the intermediate layers;
a user interface configured to select an operation mode between a first operation mode and a second operation mode;
at least one communication bus configured to connect the storage, the user interface and the at least one processor; wherein the at least one processor is further configured to generate the digital signature based on the selected operation mode and on the association of the binary subtree index *idxₜᵣₑₑ* with at least one binary subtree linked to one of the stored leaf-nodes at one of the intermediate layers.

13. The processing system according to method 12, wherein the user interface is further configured to input a message to be signed by the digital signature scheme.

14. A non-transitory computer-readable storage medium containing program instructions for computing a digital signature, wherein execution of the program instructions by one or more processors of a computer causes the one or more processors to perform steps according to the method of claims 1 to 11.
